(19)

**Europäisches Patentamt**
**European Patent Office**
**Office européen des brevets**

(11) **EP 3 929 140 B1**

(12) **EUROPEAN PATENT SPECIFICATION**

(45) Date of publication and mention
of the grant of the patent:
**02.08.2023 Bulletin 2023/31**

(21) Application number: **20305680.9**

(22) Date of filing: **22.06.2020**

(51) International Patent Classification (IPC):
*B66C 13/08* (2006.01)     *B66C 13/46* (2006.01)
*G01S 7/497* (2006.01)     *G01S 17/08* (2006.01)
*G01S 17/42* (2006.01)     *G01S 17/86* (2020.01)
*G01S 17/88* (2006.01)     *B66C 13/18* (2006.01)

(52) Cooperative Patent Classification (CPC):
**B66C 13/46; B66C 13/08; B66C 13/18;**
**G01S 7/497; G01S 17/08; G01S 17/42;**
**G01S 17/86; G01S 17/88**

(54) **METHOD FOR CORRELATING POSITION AND PROFILE MEASUREMENTS FOR A HOISTING APPLIANCE**

VERFAHREN ZUM KORRELIEREN VON POSITIONS- UND PROFILMESSUNGEN FÜR EINE HEBEVORRICHTUNG

PROCÉDÉ DE CORRÉLATION DE MESURES DE POSITION ET DE PROFIL POUR UN APPAREIL DE LEVAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.12.2021 Bulletin 2021/52**

(73) Proprietor: **Schneider Electric Industries SAS**
**92500 Rueil Malmaison (FR)**

(72) Inventors:
• **BODIN, Yannick**
 **59930 Lachapelle d'Armentières (FR)**
• **GAUDRAS, Aurélien**
 **13870 Rognonas (FR)**
• **BLONDEL, Charles**
 **38210 Cras (FR)**
• **CARVALHO, Jean-François**
 **27930 Miserey (FR)**

(74) Representative: **Schneider Electric**
**Service Propriété Industrielle**
**35, rue Joseph Monier**
**CS 30323**
**92506 Rueil-Malmaison Cedex (FR)**

(56) References cited:
**EP-A1- 3 553 460     WO-A1-2013/175075**
**US-B2- 7 787 105**

## Description

The present invention relates to a method for correlating position and profile measurements of an object performed for a hoisting appliance, and in particular an object that is to be handled by a hoisting appliance in a warehouse.

BACKGROUND

In the context of storage automatization in an industrial area, such as a warehouse hall, shipyard or the like, where objects are regularly stored and displaced, objects can be handled, moved and /or manipulated by a hoisting appliance.

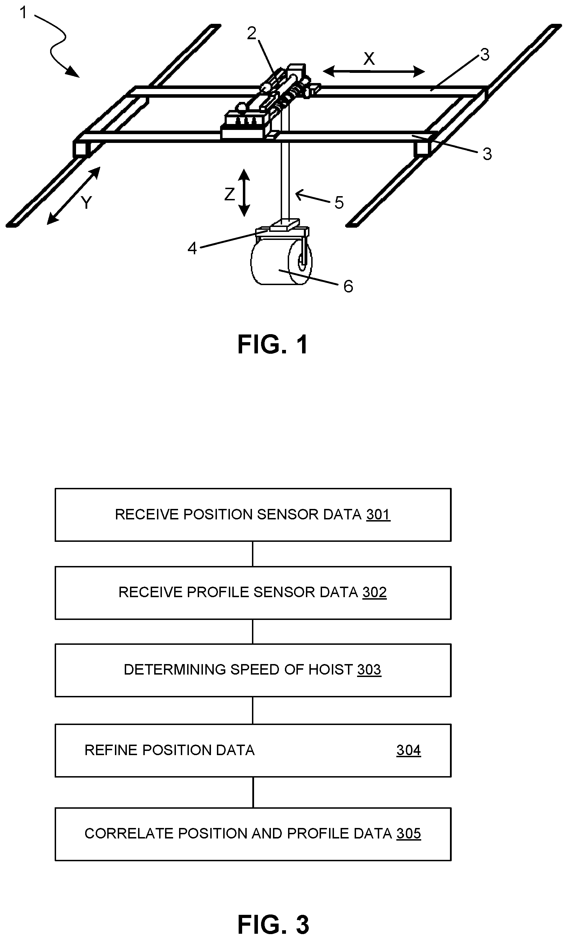

Hoisting appliances 1 such as bridge cranes, gantry cranes or overhead travelling cranes usually comprise a trolley 2 which can move over a single girder or a set of rails 3 along a horizontal axis X, as shown in Fig. 1. This first movement along the X-axis is generally referred to as short travel movement and/or trolley movement. Depending on the type of appliance, the girder or the set of rails 3, also referred to as bridge, may also be movable along a horizontal axis Y perpendicular to the X-axis, thus enabling the trolley to be moved along both the X- and Y-axes. This second movement along the Y-axis is generally referred to as long travel movement and/or bridge or crane movement. The amount of available short travel along the X-axis and long travel along the Y-axis determines a hoisting area that is spanned by the hoist 1.

A load suspension device 4 is associated with cables which pass through the trolley 2, the length of the cables 5 being controlled by the trolley 2 to vary, thereby enabling displacement of a load 6 along a vertical axis Z, referred to as hoisting movement.

In order to handle and move objects in the hoisting area, a two-dimensional, 2D, or three-dimensional, 3D, map of the warehouse hall and of the object located therein, including the position, orientation and shape, and free space around the object itself, need to be determined.

To this end, sensors installed on the hoisting appliance or near to it can be used to scan the ground while the hoisting appliance is moving. For example, sensors such as radars or scanners/cameras can be used to determine the position, orientation and profile of objects.

Document WO2013175075 discloses a hoisting appliance system and an associated method wherein the system comprises a position sensor for measuring the hoisting appliance position and a profile scanner configured to perform measurements of an object located below the hoisting appliance.

However, because of the delay in acquiring data by the sensor or sensors and communicating the data to a centralized processing control unit to calculate the object position, slow and numerous movements are generally performed to acquire sufficient data to determine location of objects, which delays operations of the hoisting appliance.

To enable applications such as automatization of the object manipulations, the determination of the object location needs to be accurate. Else, automatization is not possible and object manipulations would need to be manually performed by an operator.

A prior art solution consists in a system using a trolley above an object to be manipulated. Using two scanning units, the known solution scans the object while moving over it to determine its position and dimension. Then, another movement is necessary to grab the object. This solution therefore requires two phases (a scanning phase and a manipulation phase), thereby introducing loss of time, additional steps of stopping and starting of a motor of the trolley thereby deteriorating the system.

In another prior art solution, one scanning unit is used that slowly moves over the object to be handled, while the object is kept still in a resting position.

Automatization applications typically require determining with accuracy, less than 5mm for example), the 2D or 3D location and dimensions of each object to be manipulated. To allow for improvements in speed compared to manual manipulations, determination of the object location needs to be efficiently performed by reducing the motions performed by the sensors and/or by enhancing the processing of the data acquired by the sensors.

It is therefore desired to have an accurate determination of an object to be handled by a hoisting appliance, while reducing the time required for such determination, so as to enhance operations of the hoisting appliance.

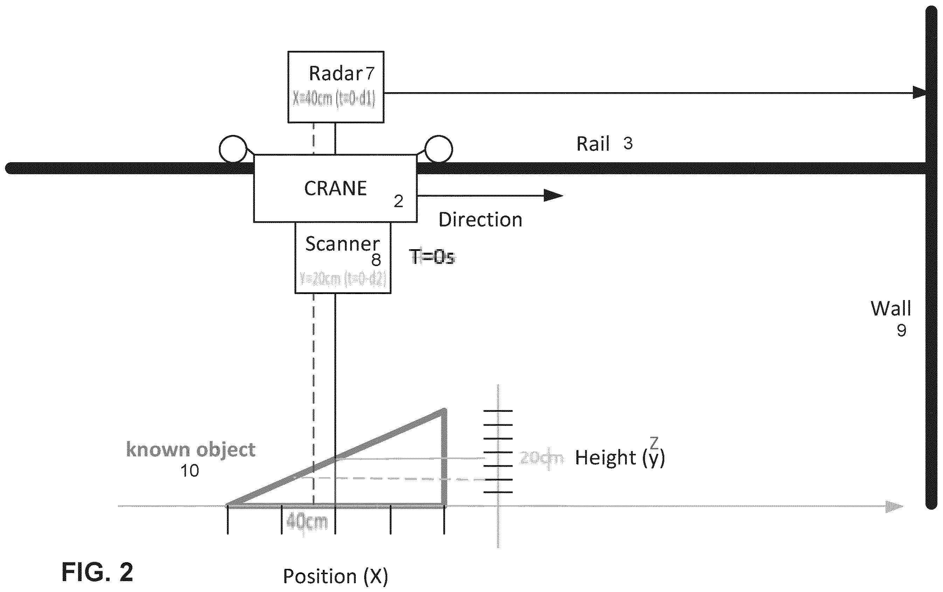

Referring to Fig. 2, a hoisting appliance 1 is shown having a trolley crane 2 that is movable along a rails 3. The trolley 2 is further equipped with a positioning system 7 and a scanning sensor 8.

The positioning system 7, in this example a radar system, including a radio emitter and a radio detector, will emit radio waves that will be reflected by structures of the surrounding environment, in this case a wall 9, that are to be detected by the detector of the radar. This will allow determining the distance between the trolley and the wall 9. In order to further increase precision, a second radio detector may be installed at a fixed reference position at a distal end of the rails 3. This will allow determining the distance between the trolley and the rail reference position. Movement of the trolley may interfere with the radio waves being emitted and radio waves being detected.

The scanning sensor 8, including a light source and two or more light sensors, will emit light via the light source that will be reflected by an object 10 present below the trolley. The reflected light may be detected by the light sensors of the scanning sensor 8. This will allow determining the distance between the trolley and the object 10 below it. Movement of the trolley will interfere with the light being emitted, the reflection against the object 10, and the detection of the reflected light by light sensors.

In order to determine the distance using the scanning sensor, the time of flight of the light emitted, reflected and detected needs to be determined. Thereto the light emitted will use pulses which can be detected, and the resulting time difference between the emittance of the pulse and the detection of the reflected pulse is measured. A pulsed or intermittent signal may be created by modulation of amplitude and/or frequency. As the light has travelled towards an object and back from that object, the light has twice travelled the distance between sensor and object. Using the speed of light constant c and the time of flight ($t_2 - t_1$), the distance D can be determined.

$$D = \frac{c \cdot (t_2 - t_1)}{2} \qquad \text{eq. 1}$$

More advanced scanning sensors may further include difference in phase angles of e.g. sinusoid signals in determining the time of flight. The principle of detecting reflected pulses and measuring remains the same.

Regardless of the type of scanning sensor used, the time measurements of pulses and distances need to be synchronized together with position measurements of the associated location of the sensor and the object. This becomes even more critical when object and sensor are moving in relation to one another. This is why thus far scanning of objects is performed at low speed with the objects kept still in a resting position.

SUMMARY OF INVENTION

It is therefore an object of the invention to provide a method that facilitates accurate measurements at high speed. According to the invention, this object is achieved by providing a method for correlating position and profile measurements of an object to be manipulated by a hoisting appliance according to claim 1.

The method may be implemented in a centralized control unit according to claim 6 and configured for controlling the hoisting appliance and comprising the following.

According to one aspect, there is provided a hoisting appliance according to claim 5, comprising a trolley provided with a position sensor, a profile scanner, and a central control unit. And wherein the central control unit is configured for executing the method for correlating position and profile measurements.

According to a further aspect, there is provided a central control unit for a hoisting appliance, the central control unit being configured for executing the method as disclosed herein.

According to another aspect, there is provided a computer program according to claim 7, executable by a processor and comprising instructions for, when executed by the processor, carrying out the steps of the method as disclosed herein.

According to yet another aspect, according to claim 8, a non-transitory computer readable storage medium with a computer program stored thereon, said computer program comprising instructions for, when executed by a processor, carrying out the steps of the method as disclosed herein.

BRIEF DESCRIPTION OF DRAWINGS

By way of example only, the embodiments of the present disclosure will be described with reference to the accompanying drawings, wherein:

> FIG. 1 illustrates schematically an example of a hoisting appliance;
> FIG. 2 illustrates schematically an example of a hoisting appliance with sensors;
> FIG. 3 illustrates an example of a method for correlating position and profile data of an object in a hoisting area in accordance with the invention;
> FIG. 4 illustrates an example of time delays of measurement, communication and processing; and
> FIG. 5 illustrates an example of a flowchart of a calibration process.

DETAILED DESCRIPTION

Referring to Fig. 3, an example is shown of a method for correlating position and profile measurements of an object in hoisting area of a hoisting appliance, the object intended to be handled by the hoisting appliance. The method may be implemented in a centralized control unit configured for controlling the hoisting appliance.

The method includes receiving position sensor data 301 from at least one position sensor of a hoisting appliance, the position sensor being configured to perform position measurements of the hoisting appliance within the hoisting area. The method further includes receiving profile scanner data 302 from at least one profile scanner located on the hoisting appliance, the profile scanner being configured to perform profile measurements of an object located below the hoisting appliance. The method further includes determining the speed (303) of the hoisting appliance, by obtaining a speed history of the hoisting appliance, and determining a position correction to account for a resulting time delay. The time delay may be the result of a measurement delay representative of a measurement time of the sensor, a communication delay representative of a communication time between the at least one sensor and the centralized control unit, and a processing delay representative of a processing time of the centralized control unit. The resulting time delay is of relevance as the time instances at which the position measurement and the profile measurement are performed may not be simultaneous.

The method further includes refining 304 and correcting the position data of the object based on the determined speed of the hoisting appliance and associated position correction. The refined position measurement allows to correlate 305 the position measurement and profile measurement and provide accurate position and profile data of the object below the hoisting appliance. With this the dimensions of the object will be known and may be used when handling the object by the hoisting appliance

In order to receive the data from the hoist sensor, e.g. the profile scanner 8 in Fig. 2, the hoisting appliance, e. g. the trolley 2 in Fig. 2, will move over the object in the hoisting area at a certain speed. The profile scanner will emit light and detect the light reflected and measure the associated time instances. Based on these measurements, the distance in e.g. mm will be calculated and transmitted from the scanner to the central control unit. The measured distance is indicative of the profile "Z" of the object being measured.

It is further required to determine a position X, Y corresponding to the time instance when the "Z" measurement was performed. However, due to the use of PLC or programmable devices, that operate by assessing their inputs on a periodical basis, commonly referred to as a scan cycle, also the time delay introduced thereby is of relevance.

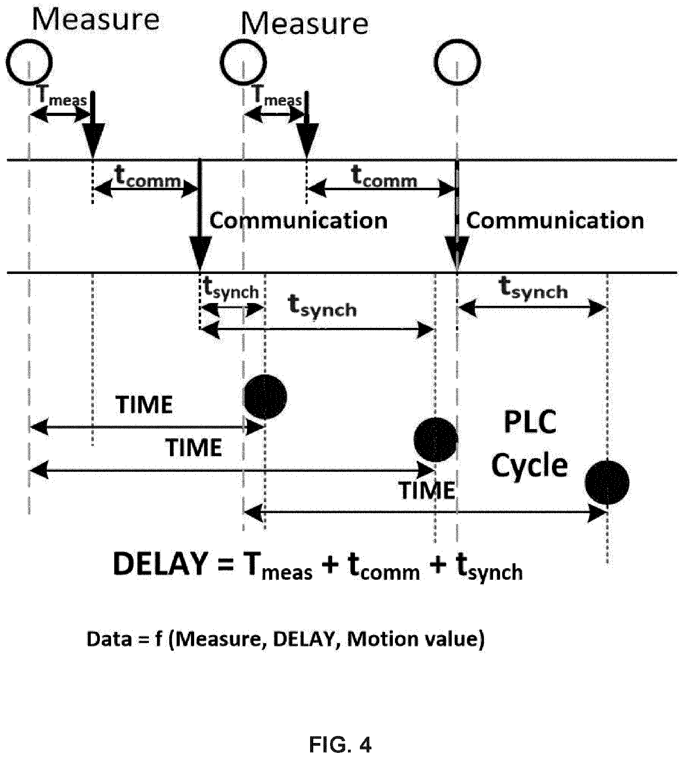

Referring to Fig. 4, an example is shown of various time delays due to measurement, communication and processing for a typical setup of a hoisting appliance.

At consecutive intervals, a position or profile measurement is performed. The measured value is then communicated to the central control unit. The time required for performing the measurement Tmeas, may also be communicated to the central control unit. As can be seen, the time till a communication is performed may vary depending on the moment of measurement and the next instance of communication. Similarly, the time for synchronizing with a next PLC scan cycle may also vary, and accordingly further delays are possibly introduced.

This means that at a calculation time instance when both the position X, Y and profile Z measurements are available at the control unit for further calculations, due to the movement of the trolley the position X, Y is not a true position corresponding with the time instance at which the profile Z was measured. Hence, it is required to correlate the profile measurement to a true i.e. exact position X', Y' of the hoisting appliance.

In order to achieve this, the history of the speed of the hoisting appliance from the first time instance when the position measurement was made is required. This may be obtained from the central control unit, which stores the history of speed of the hoisting appliance as it has also issued these as command values to the hoisting appliance. From the historical data of the speed from the first time instance of the position measurement the evolution of the position of the hoisting appliance may be further calculated.

$$\Delta Position = \int_0^t V\, dt \qquad \text{eq. 2}$$

When a second time instance at which the profile measurement is performed will be known, the position measurement may be refined to obtain the true position at which the profile measurement was performed by taking the integral of speed over the time difference of the first and second time instances. The result thereof provides a correction distance by which the position measurement needs to be refined.

Hence, the first and second time instances are required for the calculations, the time delay for position measurement i.e. Resulting_time_pos and the time delay for profile measurement i.e. Resulting_time_profile need to be known in advance. These may be provided by the supplier of the hoisting system, these may also be obtained on site during a calibration process.

Accordingly, the method may further include a calibration process. Thereto, a reference object of known size and dimension is scanned. And preferably at a fixed location in a known environment of defined dimensions.

The calibration process will scan the reference object with the hoisting appliance, i.e. the trolley, travelling at different speeds. This will allow to determine the measurement time, the communication delay time and the processing time for different speeds under various circumstances. These values may be stored in the central control unit.

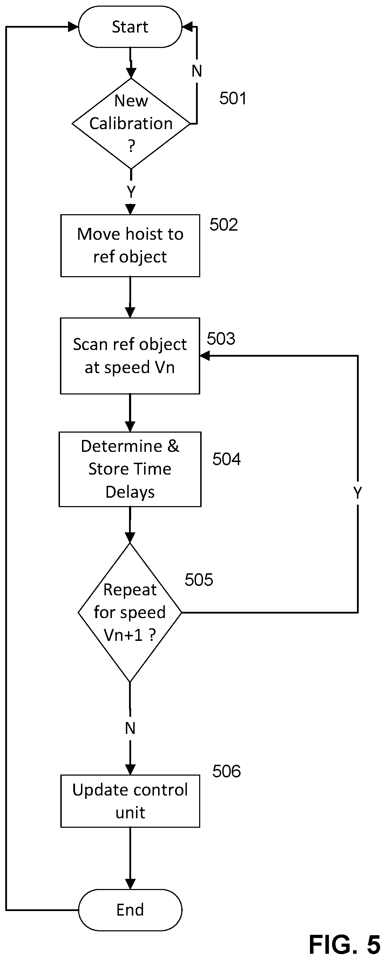

Referring to Fig. 5, an example of a flowchart for the calibration process is shown. As initial step 501 it is decided whether calibration is required. This may be done at the commissioning of the hoisting appliance, and it may be repeated over the lifespan of the hoisting appliance at a convenient moment, for example after maintenance or after service upgrade of any of the equipment present in the hoisting area. It may also be done for validation and /or insurance purposes.

If a new calibration 501 is initiated, the hoisting appliance is moved 502 towards the reference object. The reference object is scanned 503 at a first reference speed V(n). And the resulting measurements are checked against the known dimensions and position of the reference object in order to determine 504 the resulting time delay due to measurement delay, communication delay and processing delay. The resulting time delay is stored.

Depending on the desired number of reference speeds, as may be set by an operator, the scanning is repeated 505 at another speed V(n+1). When a large enough set of reference speeds is obtained, the central control unit is updated 506 with the delay times for respective different reference speeds resulting from the calibration process. In this manner, a machine learning process is enabled, that allows the hoisting appliance to perform a self-check and update its' settings if so required.

When the exact dimensions and position of the reference object are not yet known, they may be acquired in an identification sequence 507 by moving the hoisting appliance to the reference object and performing measurements in a stop-motion manner, meaning at speed V(0), for which the hoisting appliance is moved and stopped over the reference object at a various number of positions. At each position P(x,y) a profile measurement Z is performed. As the hoisting appliance is kept in still in one position while performing the profile Z measurement, no errors in time delays due to movement are introduced.

The reference object preferably has a specific shape with an inclined surface having a continuous gradient, as e.g. shown in Fig.2, which alleviates the required calculations. The length of the reference object should be large enough to allow multiple measurements of position and profile when the hoisting appliance is travelling at full speed. This also depends on the measurement cycle for both measurements, position and profile.

As mentioned, the reference object is scanned 503 at a first constant speed V(n), which preferably is the maximum speed attainable by the hoisting appliance. The constant steady speed will provide enhanced accuracy for position calculation with speed historization. In addition, also measurements may be performed with constant acceleration. The scan results provide combinations of position and profile measurements. As the positions are known, the position error Pos_error for that speed V(n) may be calculated.

Starting with :

$$\Delta Pos_{pos\_global} = \text{Error for position measurement - Error for profile position measurement}$$

$$\Delta Pos_{pos\_global} = \text{Resulting\_time\_pos} * \text{speed} - \text{Resulting\_time\_profile} * \text{speed}$$

$$\Delta Pos_{pos\_global} = ( \text{Resulting\_time\_pos} - \text{Resulting\_time\_profile} ) * \text{speed}$$

From which it follows that for 100% of maximum speed

$$\text{Pos\_error (100\%)} = ( \text{Resulting\_time\_pos} - \text{Resulting\_time\_profile} ) * \text{speed (100\%)}$$

Which can be rewritten as:

$$\text{Resulting\_time\_pos} - \text{Resulting\_time\_profile} = \Delta Pos_{pos\_global} / \text{speed}$$

Which further equals to:

$$\Delta Pos_{pos\_global} / \text{speed} = \text{Difference\_resulting\_time}$$

When two or more scan sequences have been performed, the measurements may be listed in a table. As for the reference object, the profile is known for each exact position from the identification sequence, for the scan at speed V(n) the exact position may be correlated to each profile measurement at speed V(n). While also position measurements have been performed, the difference of positions, (exact position - position measurement), will allow to determine the Resulting_time_profile.

Knowing the Resulting_time_profile and Difference_resulting_time, the Resulting_time_pos may be calculated:

$$Resulting\_time\_pos = Resulting\_time\_profile + Difference\_resulting\_time$$

With these time delays known, the true position of the hoisting appliance at the moment of the profile measurement be calculated, and the correct dimensions of the object to be handled by the hoisting appliance may b determined.

Although the present invention has been described above with reference to specific embodiments, it is not intended to be limited to the specific form set forth herein, rather the invention is limited only by the accompanying claims.

**Claims**

1. A method for correlating position and profile measurements of an object to be manipulated by a hoisting appliance, the method being implemented in a centralized control unit configured for controlling the hoisting appliance and comprising the following:

   - receiving position sensor data (301) from at least one position sensor, said sensor being configured to perform position measurements of the hoisting appliance within the hoisting area;
   - receiving profile scanner data (302) from at least one profile scanner located on the hoisting appliance, the profile scanner being configured to perform profile measurements of an object located below the hoisting appliance;
   - determining a speed (303) of the hoisting appliance, by obtaining historical data of the speed of the hoisting appliance and calculating the evolution of the position;
   - refining (304) a position of the object to be manipulated based on the position data received from the position sensor, by calculating a true position based on a predetermined time delay associated with the speed of the hoisting appliance;
   - correlating (305) the refined position and the profile data to calculate object dimensions.

2. The method according to claim 1, wherein the time delay is predetermined by a calibration process.

3. The method according to any of claims 1-2, further comprising a calibration process comprising:

   providing a reference object of known dimensions at a known location in the hoisting area;
   scanning the reference object with the sensor with the hoisting appliance travelling at a different reference speeds (V);
   the control unit for each respective reference speed:

   obtaining position and profile measurements from the sensor and scanner associated with the reference speed;
   verifying the measurements against known dimensions and position of the reference object and determining the delay time;
   storing the delay time associated with each respective reference speed.

4. The method according to one of the preceding claims, further comprising controlling the hoisting appliance based on the calculated dimensions of the object.

5. Hoisting appliance, comprising a trolley provided with a position sensor, a profile scanner, and a central control unit, wherein the central control unit is configured for executing the method according to any of claims 1 - 4.

6. Central control unit for a hoisting appliance, the central control unit being configured for executing the method according to any of claims 1 - 4 to be executed on the hoisting appliance.

7. A computer program executable by a processor and comprising instructions for, when executed by the processor, carrying out the steps of the method according to anyone of claims 1 - 4 to be executed on the hoisting appliance.

8. A non-transitory computer readable storage medium, with a computer program stored thereon, said computer program comprising instructions for, when executed by a processor, carrying out the steps of a method according to one of claims 1 - 4 to be executed on the hosting appliance.

**Patentansprüche**

1. Verfahren zum Korrelieren von Positions- und Profilmessungen eines Objekts, das durch ein Hebegerät gehandhabt wird, wobei das Verfahren in einer zentralisierten Steuereinheit, die zum Steuern des Hebegeräts ausgelegt ist, implementiert wird und Folgendes umfasst:

- Empfangen von Positionssensordaten (301) von mindestens einem Positionssensor, wobei der Positionssensor dazu ausgelegt ist, Positionsmessungen des Hebegeräts innerhalb des Hebebereichs durchzuführen;
- Empfangen von Profilscannerdaten (302) von mindestens einem Profilscanner, der sich an dem Hebegerät befindet, wobei der Profilscanner dazu ausgelegt ist, Profilmessungen eines sich unterhalb des Hebegeräts befindenden Objekts durchzuführen;
- Bestimmen einer Geschwindigkeit (303) des Hebegeräts durch Erlangen von Verlaufsdaten der Geschwindigkeit des Hebegeräts und Berechnen der Entwicklung der Position;
- Verfeinern (304) einer Position des handzuhabenden Objekts basierend auf den von dem Positionssensor empfangenen Positionsdaten durch Berechnen einer wahren Position basierend auf einer mit der Geschwindigkeit des Hebegeräts verbundenen vorbestimmten Zeitverzögerung;
- Korrelieren (305) der verfeinerten Position und der Profildaten, um Objektabmessungen zu berechnen.

2. Verfahren nach Anspruch 1, wobei die Zeitverzögerung durch einen Kalibrierungsprozess vorbestimmt wird.

3. Verfahren nach einem der Ansprüche 1-2, ferner umfassend einen Kalibrierungsprozess, der Folgendes umfasst:

Bereitstellen eines Referenzobjekts bekannter Abmessungen an einer bekannten Position in dem Hebebereich;
Scannen des Referenzobjekts mit dem Sensor, wobei sich das Hebegerät mit unterschiedlichen Referenzgeschwindigkeiten (V) bewegt;
wobei die Steuereinheit für jede jeweilige Referenzgeschwindigkeit Folgendes durchführt:

Erhalten von Positions- und Profilmessungen von dem Sensor und dem Scanner in Verbindung mit der Referenzgeschwindigkeit;
Verifizieren der Messungen gegenüber bekannten Abmessungen und einer bekannten Position des Referenzobjekts und Bestimmen der Zeitverzögerung;
Speichern der mit der jeweiligen Referenzgeschwindigkeit verbundenen Zeitverzögerung.

4. Verfahren nach einem der vorhergehenden Ansprüche, ferner umfassend Steuern des Hebegeräts basierend auf den berechneten Abmessungen des Objekts.

5. Hebegerät, umfassend eine Laufkatze, die mit einem Positionssensor, einem Profilscanner und einer zentralen Steuereinheit versehen ist, wobei die zentrale Steuereinheit zum Ausführen des Verfahrens nach einem der Ansprüche 1-4 ausgelegt ist.

6. Zentrale Steuereinheit für ein Hebegerät, wobei die zentrale Steuereinheit zum Ausführen des an dem Hebegerät auszuführenden Verfahrens nach einem der Ansprüche 1-4 ausgelegt ist.

7. Computerprogramm, ausführbar durch einen Prozessor und umfassend Anweisungen zum Durchführen, bei Ausführung durch den Prozessor, der Schritte des an dem Hebegerät auszuführenden Verfahrens nach einem der Ansprüche 1-4.

8. Nichtflüchtiges computerlesbares Speichermedium mit einem darauf gespeicherten Computerprogramm, wobei das Computerprogramm Anweisungen zum Durchführen, bei Ausführung durch einen Prozessor, der Schritte eines an dem Hebegerät auszuführenden Verfahrens nach einem der Ansprüche 1-4 umfasst.

**Revendications**

1. Procédé de corrélation de mesures de position et de profil d'un objet à manipuler par un appareil de levage, le procédé étant mis en oeuvre dans une unité de commande centralisée configurée pour commander l'appareil de levage et comprenant les étapes suivantes :

- réception de données de capteur de position (301) en provenance d'au moins un capteur de position, ledit capteur étant configuré pour exécuter des mesures de position de l'appareil de levage dans la zone de levage ;
- réception de données d'analyseur de profil (302) en provenance d'au moins un analyseur de profil situé sur l'appareil de levage, l'analyseur de profil étant configuré pour exécuter des mesures de profil d'un objet situé en dessous de l'appareil de levage ;
- détermination d'une vitesse (303) de l'application de levage, par obtention de données historiques de la vitesse de l'appareil de levage et calcul de l'évolution de la position ;
- affinement (304) d'une position de l'objet à manipuler en fonction des données de position reçues en provenance du capteur de position, par calcul d'une position réelle en fonction d'un délai temporel prédéterminé associé à la vitesse de l'appareil de levage ;
- corrélation (305) de la position affinée et des données de profil pour calculer les dimensions de l'objet.

2. Procédé selon la revendication 1, dans lequel le délai temporel est prédéterminé par un processus d'étalonnage.

3. Procédé selon l'une quelconque des revendications 1 à 2, comprenant en outre un processus d'étalonnage comprenant :

la prévision d'un objet de référence de dimensions connues à un emplacement connu dans la zone de levage ;
l'analyse de l'objet de référence au moyen du capteur avec l'appareil de levage se déplaçant à des vitesses de référence (V) différentes ;
l'unité de commande, pour chaque vitesse de référence respective :

obtenant des mesures de position et de profil prises par le capteur et l'analyseur, associées à la vitesse de référence ;
vérifiant les mesures vis-à-vis des dimensions et position connues de l'objet de référence et déterminant le temps de retard ;
stockant le temps de retard associé à chaque vitesse de référence respective.

4. Procédé selon l'une quelconque des revendications précédentes, comprenant en outre la commande de l'appareil de levage en fonction des dimensions calculées de l'objet.

5. Appareil de levage, comprenant un chariot pourvu d'un capteur de position, un analyseur de profil, et une unité de commande centrale, l'unité de commande centrale étant configurée pour exécuter le procédé selon l'une quelconque des revendications 1 à 4.

6. Unité de commande centrale pour une appareil de levage, l'unité de commande centrale étant configurée pour exécuter le procédé selon l'une quelconque des revendications 1 à 4 à exécuter sur l'appareil de levage.

7. Programme informatique exécutable par un processeur et comprenant des instructions pour, lorsqu'elles sont exécutées par le processeur, exécuter les étapes du procédé selon l'une quelconque des revendications 1 à 4 à exécuter sur l'appareil de levage.

8. Support de stockage non transitoire lisible par ordinateur, sur lequel est stocké un programme informatique, ledit programme informatique comprenant des instructions pour, lorsqu'elles sont exécutées par le processeur, exécuter les étapes du procédé selon l'une quelconque des revendications 1 à 4 à exécuter sur l'appareil de levage.

**FIG. 1**

RECEIVE POSITION SENSOR DATA <u>301</u>

RECEIVE PROFILE SENSOR DATA <u>302</u>

DETERMINING SPEED OF HOIST <u>303</u>

REFINE POSITION DATA       <u>304</u>

CORRELATE POSITION AND PROFILE DATA <u>305</u>

**FIG. 3**

FIG. 2

Measure    Measure    ◯

$T_{meas}$    $T_{meas}$

$t_{comm}$    $t_{comm}$

Communication    Communication

$t_{synch}$    $t_{synch}$

$t_{synch}$

TIME

TIME    PLC

Cycle

TIME

$$DELAY = T_{meas} + t_{comm} + t_{synch}$$

Data = f (Measure, DELAY, Motion value)

FIG. 4

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013175075 A